# EUROPEAN PATENT SPECIFICATION

(11) **EP 3 836 519 B1**
(45) Date of publication and mention of the grant of the patent: **19.04.2023**
(21) Application number: 19858234.8
(22) Date of filing: 12.07.2019
(51) Int. Cl.: H04M 1/02, H04N 23/57, H04M 1/72412

(54) **MOBILE TERMINAL**
MOBILES ENDGERÄT
TERMINAL MOBILE

(30) Priority: 06.09.2018 CN 201821460525 U
(43) Date of publication of application: 16.06.2021
(73) Proprietor: GUANGDONG OPPO MOBILE TELECOMMUNICATIONS CORP., LTD., Dongguan Guangdong 523860 (CN)
(72) Inventor: LI, Jie, Dongguan, Guangdong 523860 (CN)
(74) Representative: Manitz Finsterwald Patent- und Rechtsanwaltspartnerschaft mbB
(86) International application number: PCT/CN2019/095737
(87) International publication number: WO 2020/048225

(56) References cited:
- WO-A2-2018/094367
- CN-A- 104 363 316
- CN-U- 206 413 044
- KR-A- 20030 073 271
- US-A1- 2015 156 898
- US-A1- 2016 128 217

## Description

### TECHNICAL FIELD

The present disclosure relates to the field of mobile terminals, and in particular to a mobile terminal.

### BACKGROUND

Atypical mobile terminal (a mobile phone, a tablet, etc.) may be configured with a camera, and the camera may be configured to provide functions such as video calling and image capturing, and a scene to be captured by the camera may be relatively single.

US 2015/156898 A1 discloses a mobile terminal with a detachable camera module accommodated in a mounting recess on a rear surface of the terminal and ejected by means of a demounting button. KR 2003 0073271 A discloses a mobile terminal with a detachable modules.

### SUMMARY OF THE DISCLOSURE

According to a first aspect of the present disclosure, a mobile terminal as defined in appended claim 1 is provided.

According to the present disclosure, the image capturing device is capable of being received in the mounting groove of the terminal device and is capable of being taken out of the mounting groove. After the image capturing device is taken out of the mounting groove, the user may use the image capturing device to capture images from various view angles, to capture images for various scenes, and at the same time, the second wireless communication module of the image capturing device may be communicatively connected to the first wireless communication module of the terminal device.

### BRIEF DESCRIPTION OF THE DRAWINGS

In order to clearly describe technical solutions of the embodiments of the present disclosure or in the prior art, accompanying drawings for the description of the embodiments or the prior art will be introduced in brief. Obviously, the drawings in the following description are only some embodiments of the present disclosure. Any ordinary skilled in the art may obtain other drawings based on the following drawings without creative work.
FIG. 1 is a perspective view of an image capturing device received in a mounting groove of a mobile terminal according to an embodiment of the present disclosure.
FIG. 2 is a front view of the image capturing device received in the mounting groove of the mobile terminal shown in FIG. 1.
FIG. 3 is a perspective view of the image capturing device taken out of the mounting groove of the mobile terminal shown in FIG. 2.
FIG. 4 is an enlarged view of a portion C of the mobile terminal shown in FIG. 3.
FIG. 5 is an exploded perspective view of the image capturing device of the mobile terminal shown in FIG. 3.
FIG. 6 is a perspective view of the image capturing device of the mobile terminal shown in FIG. 5, omitting a cover shell.
FIG. 7 is a cross-sectional view of the mobile terminal shown in FIG. 2, taken along the line VII-VII.
FIG. 8 is an enlarged view of a portion D of the mobile terminal shown in FIG. 7.
FIG. 9 is a cross-sectional view of the mobile terminal shown in FIG. 2 taking along the line IX-IX.
FIG. 10 is an application scenario of the image capturing device of the mobile terminal shown in FIG. 3.
FIG. 11 is an enlarged view of a portion E of the mobile terminal shown in FIG. 7.

### DETAILED DESCRIPTION

In order to facilitate the understanding of the present disclosure, the present disclosure will be the comprehensively described by referring to the accompanying drawings. The drawings show preferred embodiments of the present disclosure. However, the present disclosure may be implemented in many different forms and is not limited to the embodiments described herein. On the contrary, the purpose of providing these embodiments is to enable the present disclosure to be understood more thoroughly and comprehensively.

The "terminal device" hereinafter may refer to, but is not limited to, a device that receives and/or sends communication signals and is connected via one or more of the following connection manners:
(1) connected via a wired line, such as public switched telephone networks (PSTN), a digital subscriber line (DSL), a digital cable, and direct cable connection;
(2) connected via a wireless interface, such as a cellular network, a Wireless Local Area Network (WLAN), a digital TV network such as a DVB-H network, a satellite network, and an AM-FM broadcast transmitter.

A terminal device set to communicate through a wireless interface may be referred to as the "mobile terminal." Examples of mobile terminals may include but are not limited to the following electronic devices:
(1) a satellite phone or a cellular phone;
(2) a personal communication system (PCS) terminal that combines a cellular radio telephone with data processing, faxing and data communication capabilities;
(3) a radio telephone, a pager, an Internet/Intranet access, a Web browser, a notebook, a calendar, a personal digital assistant (PDA) installed with a Global Positioning System (GPS) receiver;
(4) a conventional laptop and/or palmtop receiver;
(5) a conventional laptop and/or palmtop radio telephone transceiver, etc.

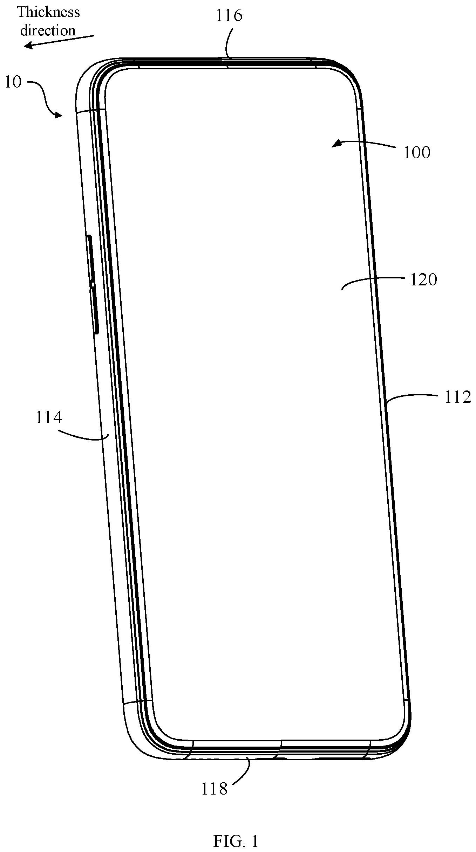

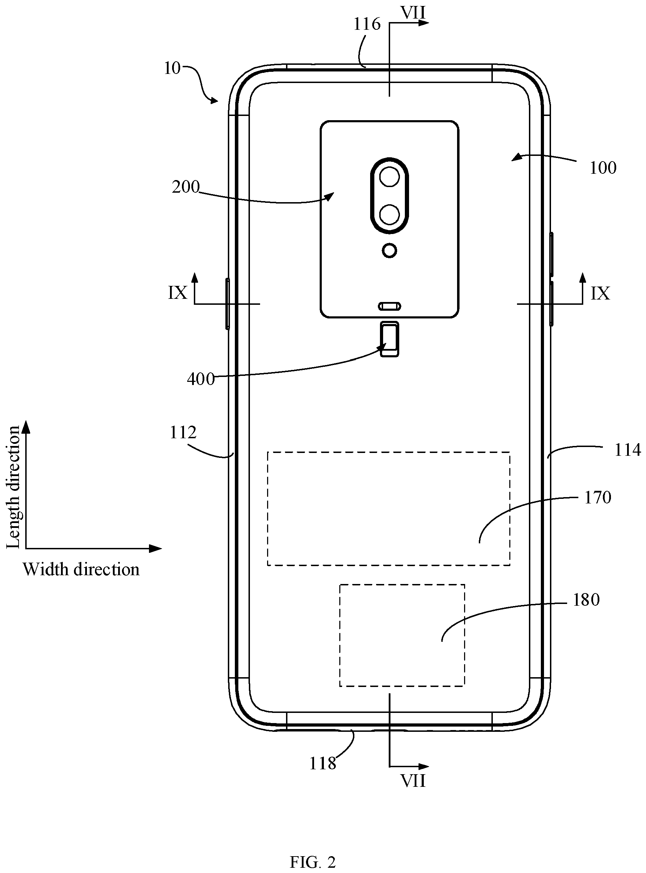

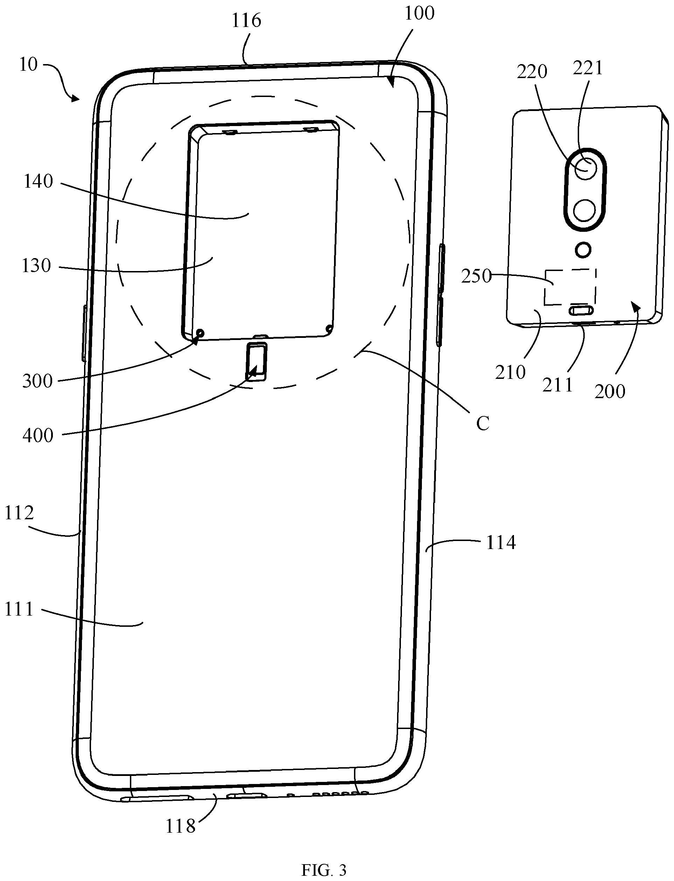

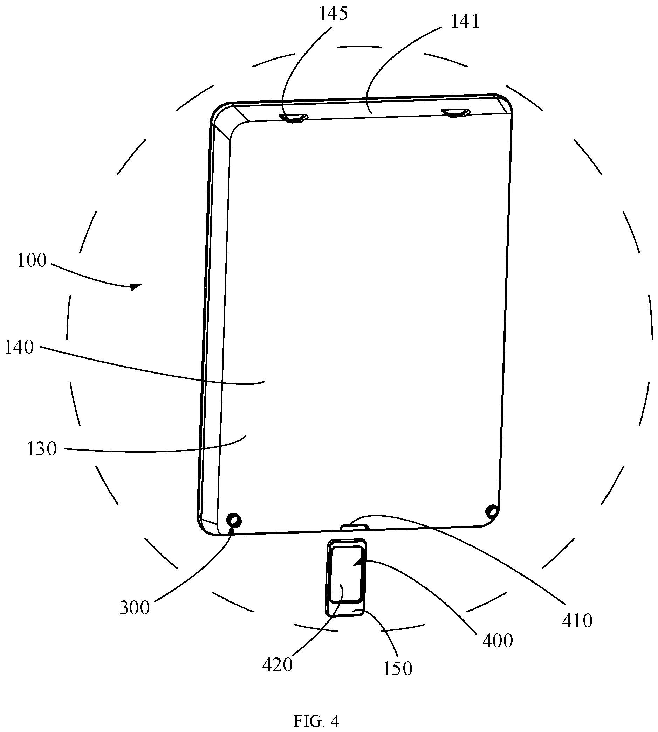

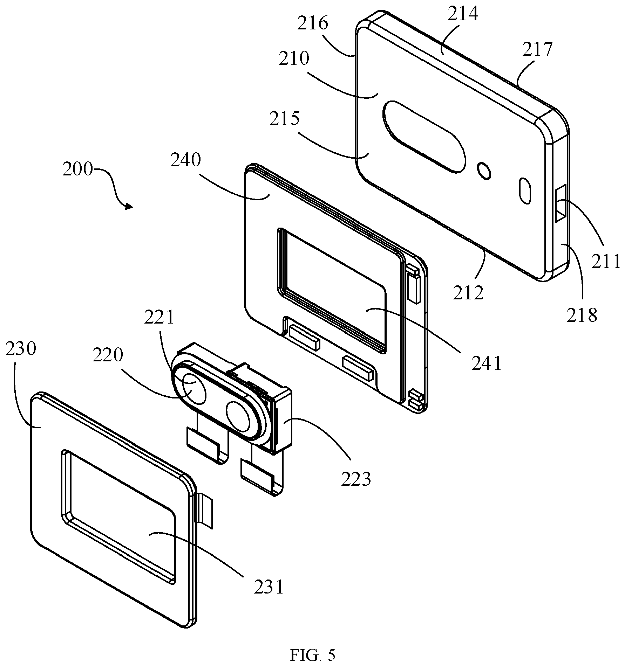

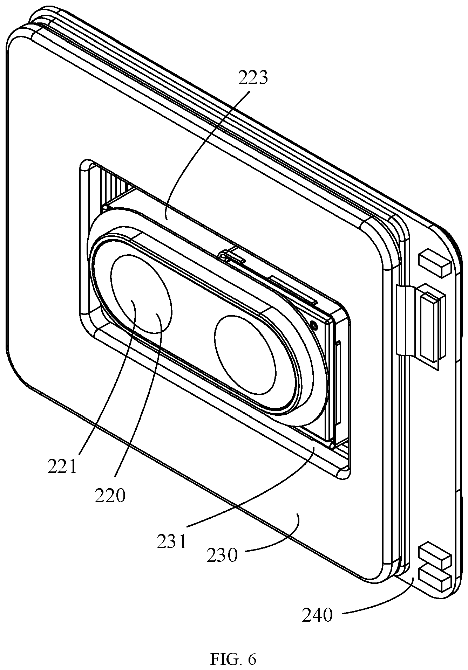

As shown in FIG. 1, FIG. 2, and FIG. 3, in one embodiment, a mobile terminal 10 may be a smart mobile phone. The mobile terminal 10 may include a terminal device 100, an image capturing device 200, a first elastic member 300 and a lock tongue 400. The terminal device 100 may include a display screen 120, a first power module 170, and a first wireless communication module 180. The first power module 170 may supply power for display screen 120 and the first wireless communication module 180. The display screen 120 may be configured to display information and to provide an interaction interface for a user. As shown in FIG. 4, a side of the terminal device 100 away from a display region of the display screen 120 may define a mounting groove 130. Further, as shown in FIG. 5 and FIG. 6, the image capturing device 200 may include a cover 210, a camera module 220, a second power module 230, and a second wireless module. The second power module 230 may supply power for the camera module 220 and the second wireless communication module 250. The camera module 220 and the second power module 230 may be disposed inside the cover 210. The camera module 220 may have a light incidence face 221, and the light incidence face 221 may be exposed from the cover 210. An ambient light may pass through the light incidence face 221 to reach a photosensitive element of the camera module 220. The image capturing device 200 may be received in the mounting groove 130, such that the light incidence face 221 may be exposed from the side of the terminal device away from the display region of the display screen 120. The cover 210 may define a slot 211.

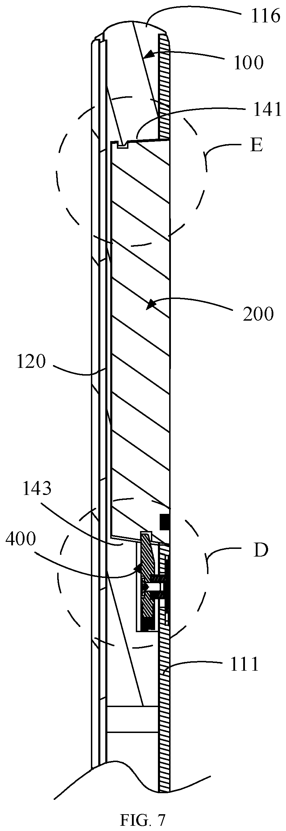

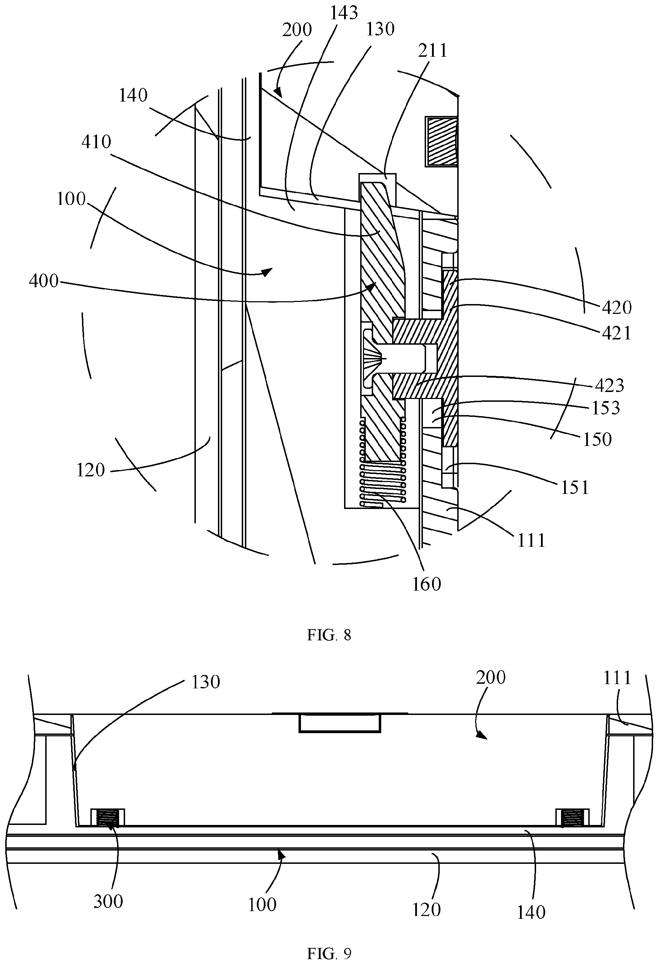

As shown in FIG. 4, the first elastic member 300 is connected to the terminal device 100, protruding from a wall of the mounting groove 130 and extending towards the mounting groove 130. As shown in FIG. 7 and FIG. 8, the lock tongue 400 is slidably connected to the terminal device 100, and more specifically, the lock tongue 400 slides to reach a first position and a second position. As shown in FIG. 8, after the image capturing device 200 is received in the mounting groove 130, the lock tongue 400 slides to the first position. In detail, when the lock tongue 400 is at the first position, the lock tongue 400 is received in the slot 211 and fastened with a wall of the slot 211.The image capturing device 200 may be securely received in the mounting groove 130, and the first elastic member 300 abuts against the image capturing device 200. When the lock tongue 400 slides to reach the second position, the lock tongue 400 may be released out of the slot 211. Further as shown in FIG. 9, the first elastic member 300 ejects the image capturing device 200 out of the mounting groove 130 such that the image capturing device 200 may be detached from the mounting groove 130. After detaching the image capturing device 200 from the mounting groove 130, the second wireless communication module 250 may be communicatively connected to the first wireless communication module 180, such that the image capturing device 200 may be communicatively connected to the terminal device 100. In other embodiments, the mobile terminal 10 may be a tablet.

The first wireless communication module 180 and the second communication module may be configured for data transmission between the terminal device 100 and the image capturing device 200. A near field communication technology may be applied in the first wireless communication module 180 and the second wireless communication module 250, and a same communication protocol may be applied in the first wireless communication module 180 and the second wireless communication module 250. For example, both of the first wireless communication module 180 and the second wireless communication module 250 may be Bluetooth communication modules, Wireless Fidelity (Wi-Fi) communication module, infrared data association (IrDA) modules, ZigBee communication modules, ultra wideband modules, or near field communication (NFC) modules, etc. In one embodiment, the terminal device 100 may include a third wireless communication module, and the third wireless communication module may be configured to communicatively connect to an external device, such as a base station or other mobile terminals 10, such that various mobile terminals 10 may communicate easily.

It should be understood that, in response to the image capturing device 200 being securely received in the mounting groove 130, the image capturing device 200 may communicatively connect to the first wireless communication module 180 through the second wireless communication module 250. In this situation, the camera module 220 is able to serve as a rear camera. The user may use the image capturing device 200 to capture an image distantly, to record a video, and the like. After the image capturing device 200 is detached from the mounting groove 130, the second wireless communication module 250 may be communicatively connected to the first wireless communication module 180. In this situation, the user may use the image capturing device 200 to capture images from various angles and to capture various scenes.

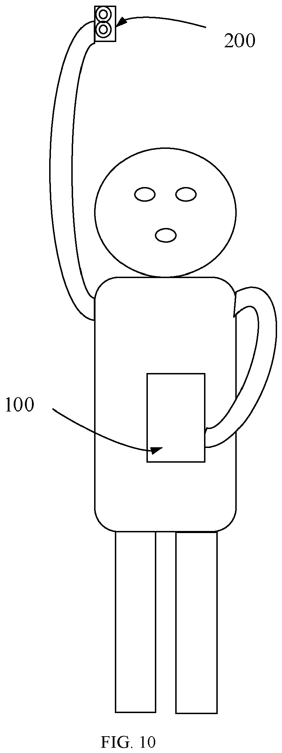

In the mobile terminal 10 as described in the above, the image capturing device 200 may be securely received in the mounting groove 130 and detached from the mounting groove 130. After the image capturing device 200 being detached from the mounting groove 130, the image capturing device 200 may communicatively connect to the first wireless communication module 180 of the terminal device 100 through the second wireless communication module 250, and the user may use the image capturing device 200 to capture images from various angles and to capture various scenes. As shown in FIG. 10, in one embodiment, the user may use one hand to hold the image capturing device 200, and use the other hand to hold the terminal device 100. The user may use the image capturing device 200 to capture images from various positions and various angles, and view the captured images through the display screen 120 of the terminal device 100. In another example, the user may place the image capturing device 200 at a certain location, and stand at another location and view the images captured by the image capturing device 200 through the terminal device 100. It should be understood that, as the image capturing device 200 is able to be detached from the terminal device 100, and is able to communicatively connect to the terminal device 100 after being detached, a front camera may not be required to be configured on a side of the terminal device 100 on which the display screen 120 is disposed. Therefore, a screen-to-body ratio of the terminal device 100 may be improved. For example, by configuring the terminal device 100 in the above-mentioned structure, the screen-to-body ratio may be over 85%. It should be understood that configuration of the first elastic member 300 and the lock tongue 400 may enable the image capturing device 200 to be fixedly received in the mounting groove 130, preventing the image capturing device 200 from being released out of the mounting groove 130 easily. When the lock tongue 400 is released from the slot 211, the first elastic member 300 may eject the image capturing device 200 out of the mounting groove 130, such that the user may take the image capturing device 200 easily.

As shown in FIGS. 1 to 3, the terminal device 100 may substantially be a rectangular cube. The terminal device 100 may include a rear wall 111 and a side wall connected to an outer periphery of the display screen 120. The rear wall 111 may be disposed on the side of the terminal device 100 opposite to the display region and may be connected to the side wall. The side wall may include a left side wall 112, a right side wall 114 opposite to the left side wall 112, a top side wall 116, and a bottom side wall 118 opposite to the top side wall 116. The left side wall 112 and the right side wall 114 are disposed between the top side wall 116 and the bottom side wall 118. The top side wall 116 and the bottom side wall 118 are disposed between the left side wall 112 and the right side wall 114. The mounting groove 130 may be defined in the rear wall 111 and extend through the rear wall 111 along a thickness direction of the terminal device 100, i.e. the mounting groove 130 may be a through hole defined in the rear wall 111. The mounting groove 130 may be defined between the left side wall 112 and the right side wall 114, and between the top side wall 116 and the bottom side wall 118. Further, the terminal device 100 may include a middle board 140, disposed between the display screen 120 and the rear wall 111. The first elastic member 300 may be connected to the middle board 140. The middle board 140 and the side wall may be formed integrally. Alternatively, the middle board 140 may be detachably connected to the side wall. Structural stability of the first elastic member 300 may be improved by configuring the middle board 140 to support the first elastic member 300.

As shown in FIG. 7 and FIG. 8, a side of the rear wall 111 opposite to the display region may define a groove 150 extending through the rear wall 111 along the thickness direction of the terminal device 100. The lock tongue 400 may include a body portion 410 and a slide block 420 connected to the body portion 410. The slide block 420 may be received in and extend through the groove 150. The body portion 410 may switch between the first position and the second position by slidable engagement between the slide block 420 and the groove 150. Further, the groove 150 may include a slide groove 151 and a reservation groove 153 communicating with the slide groove 151. The slide block 420 may include a limiting portion 421 and a connection portion 423, and the limiting portion 421 and the connection portion 423 may be integrally formed as an overall structure. The connection portion 423 may be received in and extend through the reservation groove 153, and may be connected to the body portion 410. The limiting portion 421 may be slidably received in the slide groove 151 and may be exposed from the side of the rear wall 111 opposite to the display region. The user may slide the limiting portion 421 along the slide groove 151 to allow the body portion 410 to switch between the first position and the second position.

Further, in one implementation, a size of a cross section of the reservation groove 153 may be greater than that of the connection portion 423, and the size of the cross section of the reservation groove 153 may be less than that of the limiting portion 421. In this way, the connection portion 423 and the body portion 410 may be engaged easily, and a position that the limiting portion 421 may slide to reach may be limited by the walls of the reservation groove 153, preventing a tilted limiting portion 421 from being received in the reservation groove 153, such that reliability of movement of the lock tongue 400 may be improved.

As shown in FIG. 8, in one embodiment, the mobile terminal 10 may include a second elastic member 160. One end of the second elastic member 160 may abut against the body portion 410, and the other end of the second elastic member 160 may abut against the terminal device 100. The second elastic member 160 may push the body portion 410 from the second position to the first position, such that the body portion 410 may be received in the mounting groove 130. In one embodiment, the second elastic member 160 may be a spring, and may allow the lock tongue 400 to be reset easily, such that the lock tongue 400 may protrude from the wall of the mounting groove 130 to be at least partially received in the mounting groove, and may securely lock the image capturing device 200 while being in the first position. In other embodiments, the second elastic member 160 may be an elastic post, an elastic sheet, and the like. It should be understood that, the first elastic member 30 may be a spring, an elastic post, an elastic sheet, and the like, which will not be illustrated in more detail herein. It should be understood that, the second elastic member 160 may be omitted. The image capturing device 200 may be securely received in the mounting groove 130 by configuring the lock tongue 400 to slide relative to the rear wall 111 to be received into the slot 211 of the image capturing device 200.

As shown in FIG. 7 and FIG. 8, the terminal device 100 has a first groove wall 141 and the second groove wall 143 opposite to first groove wall 141. The first and the second groove walls are the walls of the mounting groove 130. One end of the first groove wall 141 is connected to the middle board 140, and another end of the first groove wall 141 is connected to the rear wall 111. One end of the second groove wall 143 is connected to the middle board 140, and another end of the second groove wall 143 is connected to the rear wall 111. The second groove wall 143 may be inclined towards a side at which the bottom side wall 118 is arranged to form a draft angle, i.e. a distance between the another end of the second groove wall 143 and the bottom side wall 118 may be less than a distance between the one end of the second groove wall 143 and the bottom side wall 118. When the lock tongue 400 moves to reach the second position to unlock the image capturing device 200 with the terminal device 100, the draft angle may allow the image capturing device 200 to be ejected from the mounting groove 130 easily, such that the user may take the image capturing device 200 out of the mounting groove 130 easily.

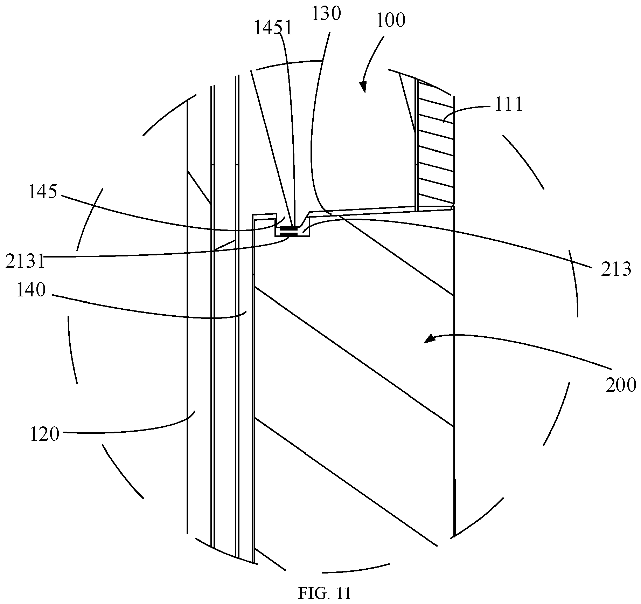

Compared to the second groove wall 143, the first groove wall 141 may be closer to the top side wall 116. In the first position, the body portion 410 may protrude from the second groove wall 143. Further, as shown in FIG. 11, a protrusion 145 is arranged on the first groove wall 141. The protrusion 145 may protrude from the first groove wall 141, extending towards the mounting groove 130. The cover 210 defines a positioning recess 213 corresponding to the protrusion 145. After the image capturing device 200 received in the mounting groove 130, the protrusion 145 may be received in the positioning recess 213 and fastened with a wall of the positioning recess 213. Fastening the protrusion 145 with the wall of the positioning recess 213 may allow the image capturing device 200 to be positioned inside the mounting groove 130 easily, and allow the user to mount the image capturing device 200 into the mounting groove 130 securely, preventing the image capturing device 200 from being detached from the mounting groove 130 easily.

Further, as shown in FIG. 5 and FIG. 6, the image capturing device 200 may substantially be a rectangular cube. The cover 210 may include a front end face 215, a rear end face 217 opposite to the front end face 215, and a side end face connected to the front end face 215 and the rear end face 217. The side end face may include a left end face 212, a right end face 214 opposite to the left end face 212, a top end face 216, and a bottom end face 218 opposite to the top end face 216. The left end face 212 and the right end face 214 may be disposed between the top end face 216 and the bottom end face 218. The top end face 216 and the bottom end face 218 may be disposed between the left end face 212 and the right end face 214. The light incidence face 221 may be exposed from the front end face 215. The slot 211 may be defined in a side at which the bottom end face 218 is disposed. In the embodiment where the image capturing device 200 defines the positioning recess 213, the positioning recess 213 may be defined in the side at which the top end face 216 is disposed. When the image capturing device 200 is received in the mounting groove 130, the front end face 215 may flush with an outer surface of the rear wall 111. After the image capturing device 200 having the above-mentioned structure is received in the mounting groove 130, an appearance of the mobile terminal 10 may be highly maintained as an integral. In one embodiment, the light incidence face 221 may protrude form the front end face 215. In this way, a position of the image capturing device 200 at which the light incidence face 221 is disposed may be relatively thick, and other positions of the image capturing device 200 may be relatively thin. In this way, the image capturing device 200 may be light and thin, and the mobile terminal 10 may be light and thin.

In one embodiment, the image capturing device 200 may include a module contact 2131, and the terminal device 100 may include a device contact 1451. When the image capturing device is received in the mounting groove 130, the module contact 2131 may be in contact with and connected to the device contact 1451, such that the terminal device 100 may charge the image capturing device 200. In this way, the terminal device 100 may easily charge the image capturing device 200, and the image capturing device 200 may remain sufficient power to be used by the user easily. It should be understood that each of the module contact 2131 or the device contact 1451 may be a metal contact, and may have various structural forms. For example, the image capturing device 200 may define a hole, and the metal contact may be received in the hole, serving as the module contact 2131. The terminal device 100 may be arranged with a protruded metal contact, serving as the device contact 1451. The terminal device 100 charging the image capturing device 200 may be achieved by engaging the module contact 2131 with the device contact 1451. Further, in one implementation, the protrusion 145 may have the metal contact structure, serving as the device contact 1451, and the metal contact may be received in the positioning recess 213 to serve as the module contact 2131.

As shown in FIG. 5 and FIG. 6, the image capturing device 200 may include a module main board 240 in the cover 210. The second power module 230 may be stacked on the module main board 240 and supply power for the module main board 240. The module main board 240 may be communicatively connected to the camera module 220 and the second wireless communication module 250. The module main board 240 may include a circuit board and a plurality of electronic elements connected to the circuit board. The module main board 240 may process image information collected by the camera module 220, and send the image information to the terminal device 100 via the second wireless communication module 250. The module main board 240 may define a first through hole 241 to allow the module main board 240 to be substantially ring-shaped. The camera module 220 may include a lens tube 223, the light incidence face 221 may be exposed at an end of the lens tube 223, and the lens tube 223 may be received in and extend through the first through hole 241. In this way, the lens tube 223 may not stack above the module main board 240, and therefore, internal elements of the image capturing device 200 may be arranged compactly, and an overall thickness of the image capturing device 200 may be reduced.

Further, the second power module 230 may define a second through hole 231 to allow the second power module 230 to be substantially ring-shaped. The second through hole 231 may communicate with the first through hole 241. The lens tube 223 may extend through the first through hole 241 and the second through hole 231. In this way, the lens tube 223 may not stack above the second power module 230. Therefore, the internal elements of the image capturing device 200 may be arranged compactly, and the overall thickness of the image capturing device 200 may be reduced. It should be understood that each of the first power module 170 and the second power module 230 may include a battery able to repeatedly charge and discharge, such as a lithium battery. In other embodiments, each of the first power module 170 and the second power module 230 may be a fuel battery or other types of batteries. The second power module 230 may be connected to the module main board 240 through a power flexible printed circuit board (FPC), such that the second power module 230 may supply power for the module main board 240, which will not be described in detail herein.

Various technical features of the above-mentioned embodiments may be combined arbitrarily. In order to provide a concise description, all possible combinations of the various technical features in the above-mentioned embodiments are not described.

The above-mentioned embodiments only show several implementations of the present disclosure, and the several implementations are described in specific details, but it should not be understood as a limitation of the scope of the present disclosure. It should be noted that for those ordinary skilled in the art, without departing from the concept of the present disclosure, various modifications and improvements may be made.

Therefore, the scope of the present disclosure shall be subject to the appended claims.

## Claims

1. A mobile terminal (10), comprising:
a terminal device (100), comprising a display screen (120) and a first power module (170), wherein the first power module (170) is configured to supply power for the display screen (120), a rear wall (111) of the terminal device (100) opposite to a display region of the display screen (120) defines a mounting groove (130);
an image capturing device (200), comprising a cover (210), a camera module (220), and a second power module (230), wherein the second power module (230) is configured to supply power for the camera module (220), the camera module (220) and the second power module (230) are disposed inside the cover (210), the camera module (220) has a light incidence face (221) exposed from the cover (210), the image capturing device (200) is capable of being received in the mounting groove (130) to allow the light incidence face (221) to be exposed from the side of the terminal device (100) opposite to the display region, the cover (210) defines a slot (211);
a first elastic member (300), connected to the terminal device (100) and protruding from a wall of the mounting groove (130) and extending towards the mounting groove (130); and
a lock tongue (400), slidably connected to the terminal device (100) and capable of sliding to reach a first position and a second position, wherein after the image capturing device (200) is received in the mounting groove (130),
the lock tongue (400) is at least partially received in the slot (211) and fastened with a wall of the slot (211), the image capturing device (200) is locked in the mounting groove (130), and the first elastic member (300) abuts against the image capturing device (200), when the lock tongue (400) is at the first position;
the lock tongue (400) is released from the slot (211), and the first elastic member (300) is configured to eject the image capturing device (200) out of the mounting groove (130) to allow the image capturing device (200) to be detached from the mounting groove (130), when the lock tongue (400) is at the second position;
a middle board (140), configured as a bottom wall of the mounting groove (130) and arranged between the display screen (120) and the rear wall (111);
a first groove wall (141); and
a second groove wall (143) opposite to the first groove wall (141);
wherein the first groove wall (141) and the second groove wall (143) are walls of the mounting groove (130); an end of the first groove wall (141) is connected to the middle board (140), and another end of the first groove wall (141) is connected to the rear wall (111); an end of the second groove wall (143) is connected to the middle board (140), and another end of the second groove wall (143) is connected to the rear wall (111);
wherein the first elastic member (300) protrudes out from the middle board (140) and provides an elastic force toward an opening of the mounting groove (130); when the image capturing device (200) is received in the mounting groove (130), the first elastic member (300) abuts against the image capturing device (200);
wherein the lock tongue (400) is arranged at a side with the second groove wall (143), and the first groove wall (141) is arranged with a protrusion (145); the protrusion (145) protrudes from the first groove wall (141) and extends towards the mounting groove (130);
the cover (210) defines a positioning recess (213); and
after the image capturing device (200) is received in the mounting groove (130), the protrusion (145) is received in the positioning recess (213) and fastened with a wall of the positioning recess (213).

2. The mobile terminal (10) as claimed in claim 1, wherein the terminal device (100) further comprises a side wall connected to an outer periphery of the display screen (120);
the side wall comprises a left side wall (112), a right side wall (114) opposite to the left side wall (112), a top side wall (116), and a bottom side wall (118) opposite to the top side wall (116);
the left side wall (112) and the right side wall (114) are disposed between the top side wall (116) and the bottom side wall (118);
the top side wall (116) and the bottom side wall (118) are disposed between the left side wall (112) and the right side wall (114);
the mounting groove (130) extends through the rear wall (111);
the mounting groove (130) is defined between the left side wall (112) and the right side wall (114), and is defined between the top side wall (116) and the bottom side wall (118).

3. The mobile terminal (10) as claimed in claim 2, wherein a side of the rear wall (111) opposite to the display region defines a groove (150) extending through a thickness of the rear wall (111);
the lock tongue (400) comprises a body portion (410) and a slide block (420) connected to the body portion (410);
the slide block (420) extends through the groove (150); and
the body portion (410) is switched between the first position and the second position by sliding engagement between the slide block (420) and the groove (150).

4. The mobile terminal (10) as claimed in claim 3, wherein the groove (150) comprises a slide groove (151) and a reservation groove (153) communicating with the slide groove (151);
the slide block (420) comprises a limiting portion (421) and a connection portion (423), the limiting portion (421) and the connection portion (423) are connected with each other to be an integral structure;
the connection portion (423) is received in and extends through the reservation groove (153) and is detachably connected to the body portion (410);
the limiting portion (421) is slidably received in the slide groove (151) and is exposed from the side of the rear wall (111) opposite to the display region.

5. The mobile terminal (10) as claimed in claim 4, wherein a size of a cross section of the reservation groove (153) is greater than that of the connection portion (423), and the size of the cross section of the reservation groove (153) is less than that of the limiting portion (421).

6. The mobile terminal (10) as claimed in claim 4 or claim 5, further comprising a second elastic member (160), wherein one end of the second elastic member (160) abuts against the body portion (410), the other end of the second elastic member (160) abuts against the terminal device (100); and
the second elastic member (160) is configured to push the body portion (410) from the second position to the first position to allow the body portion (410) to be at least partially received in the mounting groove (130).

7. The mobile terminal (10) as claimed in any one of claims 3 to 6, wherein
compared to the second groove wall (143), the first groove wall (141) is closer to the top side wall (116);
the body portion (410) protrudes from the second groove wall (143) when the lock tongue (400) is at the first position.

8. The mobile terminal (10) as claimed in claim 7, wherein the second groove wall (143) is inclined towards a side at which the bottom side wall (118) is disposed to serve as a draft angle.

9. The mobile terminal (10) as claimed in any one of claims 2 to 8, wherein the cover (210) comprises a front end face (215), a rear end face (217) opposite to the front end face (215), and a side end face connected between the front end face (215) and the rear end face (217);
the side end face comprises a left end face (212), a right end face (214) opposite to the left end face (212), a top end face (216), and a bottom end face (218) opposite to the top end face (216);
the left end face (212) and the right end face (214) are disposed between the top end face (216) and the bottom end face (218);
the top end face (216) and the bottom end face (218) are disposed between the left end face (212) and the right end face (214);
the light incidence face (221) is exposed from the front end face (215);
when the image capturing device (200) is received in the mounting groove (130), the front end face (215) flushes with an outer surface of the rear wall (111).

10. The mobile terminal (10) as claimed in any one of claims 1 to 9, wherein the image capturing device (200) comprises a module contact (2131), the terminal device (100) comprises a device contact (1451);
when the image capturing device (200) is received in the mounting groove (130), the module contact (2131) is in contact with and connected to the device contact (1451) to allow the terminal device (100) to charge the image capturing device (200).

11. The mobile terminal (10) as claimed in any one of claims 1 to 9, wherein the image capturing device (200) comprises a module main board (240) disposed inside the cover (210);
the second power module (230) is stacked on the module main board (240) and is configured to supply power for the module main board (240);
the module main board (240) is communicatively connected to the camera module (220);
the module main board (240) defines a first through hole (241), the camera module (220) comprises a lens tube (223), the light incidence face (221) is exposed at an end of the lens tube (223), and the lens tube (223) extends through the first through hole (241).

12. The mobile terminal (10) as claimed in claim 11, wherein the second power module (230) defines a second through hole (231), the second through hole (231) communicates with the first through hole (241), and the lens tube (223) extends through the second through hole (231).

13. The mobile terminal (10) as claimed in any one of claims 1 to 12, wherein
the terminal device (100) further comprises a first wireless communication module (180), the image capturing device (200) further comprises a second wireless communication module (250);
the first power module (170) is further configured to supply power for the first wireless communication module (180), the second power module (230) is further configured to supply power for the second wireless communication module (250); and
the first wireless communication module (180) is capable of being communicatively connected to the second wireless communication module (250).

14. The mobile terminal (10) as claimed in claim 13, wherein both of the first wireless communication module (180) and the second wireless communication module (250) are Bluetooth communication modules, or WiFi communication modules, or ZigBee communication modules, or NFC communication modules.

## Patentansprüche

1. Mobiles Endgerät (10), das Folgendes umfasst:
eine Endgerätvorrichtung (100), die einen Anzeigebildschirm (120) und ein erstes Leistungsmodul (170) umfasst, wobei das erste Leistungsmodul (170) konfiguriert ist, den Anzeigebildschirm (120) mit Energie zu versorgen, und eine Rückwand (111) der Endgerätvorrichtung (100), die einem Anzeigebereich des Anzeigebildschirms (120) gegenüberliegt, eine Befestigungsnut (130) definiert;
eine Bildaufnahmevorrichtung (200), die eine Abdeckung (210), ein Kameramodul (220) und ein zweites Leistungsmodul (230) umfasst, wobei das zweite Leistungsmodul (230) konfiguriert ist, das Kameramodul (220) mit Energie zu versorgen, das Kameramodul (220) und das zweite Leistungsmodul (230) in der Abdeckung (210) angeordnet sind, das Kameramodul (220) eine Lichteinfallsfläche (221) besitzt, die aus der Abdeckung (210) freigelegt ist, die Bildaufnahmevorrichtung (200) in die Befestigungsnut (130) aufgenommen werden kann, um zu ermöglichen, dass die Lichteinfallsfläche (221) von der Seite der Endgerätvorrichtung (100), die dem Anzeigebereich gegenüberliegt, freigelegt ist und die Abdeckung (210) einen Schlitz (211) definiert;
ein erstes elastisches Element (300), das mit der Endgerätvorrichtung (100) verbunden ist, aus einer Wand der Befestigungsnut (130) vorsteht und zur Befestigungsnut (130) verläuft;
eine Verriegelungszunge (400), die mit der Endgerätvorrichtung (100) verschiebbar verbunden ist und verschoben werden kann, um eine erste Stellung und eine zweite Stellung zu erreichen, wobei danach die Bildaufnahmevorrichtung (200) in die Befestigungsnut (130) aufgenommen ist, wobei
die Verriegelungszunge (400) mindestens teilweise in den Schlitz (211) aufgenommen und mit einer Wand des Schlitzes (211) befestigt ist, die Bildaufnahmevorrichtung (200) in der Befestigungsnut (130) verriegelt ist und das erste elastische Element (300) an der Bildaufnahmevorrichtung (200) anliegt, wenn die Verriegelungszunge (400) in der ersten Stellung ist; und
die Verriegelungszunge (400) aus dem Schlitz (211) freigegeben wird und das erste elastische Element (300) konfiguriert ist, die Bildaufnahmevorrichtung (200) aus der Befestigungsnut (130) auszuwerfen, um zu ermöglichen, dass die Bildaufnahmevorrichtung (200) aus der Befestigungsnut (130) gelöst ist, wenn die Verriegelungszunge (400) in der zweiten Stellung ist;
eine Mittelplatte (140), die als eine Bodenwand der Befestigungsnut (130) konfiguriert ist und zwischen dem Anzeigebildschirm (120) und der Rückwand (111) angeordnet ist;
eine erste Nutwand (141) und
eine zweite Nutwand (143), die der ersten Nutwand (141) gegenüberliegt; wobei
die erste Nutwand (141) und die zweite Nutwand (143) Wände der Befestigungsnut (130) sind; ein Ende der ersten Nutwand (141) mit der Mittelplatte (140) verbunden ist und ein weiteres Ende der ersten Nutwand (141) mit der Rückwand (111) verbunden ist, und ein Ende der zweiten Nutwand (143) mit der Mittelplatte (140) verbunden ist und ein weiteres Ende der zweiten Nutwand (143) mit der Rückwand (111) verbunden ist;
das erste elastische Element (300) von der Mittelplatte (140) vorsteht und eine Federkraft zu einer Öffnung der Befestigungsnut (130) bereitstellt; wobei dann, wenn die Bildaufnahmevorrichtung (200) in die Befestigungsnut (130) aufgenommen ist, das erste elastische Element (300) an der Bildaufnahmevorrichtung (200) anliegt;
die Verriegelungszunge (400) auf einer Seite mit der zweiten Nutwand (143) angeordnet ist und die erste Nutwand (141) mit einem Vorsprung (145) ausgelegt ist; wobei der Vorsprung (145) aus der ersten Nutwand (141) vorsteht und zur Befestigungsnut (130) verläuft;
die Abdeckung (210) eine Positionierungsaussparung (213) definiert und
der Vorsprung (145), nachdem die Bildaufnahmevorrichtung (200) in die Befestigungsnut (130) aufgenommen worden ist, in die Positionierungsaussparung (213) aufgenommen und mit einer Wand der Positionierungsaussparung (213) befestigt ist.

2. Mobiles Endgerät (10) nach Anspruch 1, wobei die Endgerätvorrichtung (100) ferner eine Seitenwand umfasst, die mit einem Außenumfang des Anzeigebildschirms (120) verbunden ist, wobei
die Seitenwand eine linke Seitenwand (112), eine rechte Seitenwand (114), die der linken Seitenwand (112) gegenüberliegt, eine obere Seitenwand (116) und eine untere Seitenwand (118), die der oberen Seitenwand (116) gegenüberliegt, umfasst;
die linke Seitenwand (112) und die rechte Seitenwand (114) zwischen der oberen Seitenwand (116) und der unteren Seitenwand (118) angeordnet sind;
die obere Seitenwand (116) und die untere Seitenwand (118) zwischen der linken Seitenwand (112) und der rechten Seitenwand (114) angeordnet sind;
die Befestigungsnut (130) durch die Rückwand (111) verläuft und
die Befestigungsnut (130) zwischen der linken Seitenwand (112) und der rechten Seitenwand (114) definiert ist und zwischen der oberen Seitenwand (116) und der unteren Seitenwand (118) definiert ist.

3. Mobiles Endgerät (10) nach Anspruch 2, wobei eine Seite der Rückwand (111), die dem Anzeigebereich gegenüberliegt, eine Nut (150) definiert, die durch eine Dicke der Rückwand (111) verläuft; wobei
die Verriegelungszunge (400) einen Körperabschnitt (410) und einen Schiebeblock (420), der mit dem Körperabschnitt (410) verbunden ist, umfasst;
der Schiebeblock (420) durch die Nut (150) verläuft; und
der Körperabschnitt (410) durch schiebenden Eingriff zwischen dem Schiebeblock (420) und der Nut (150) zwischen der ersten Stellung und der zweiten Stellung umgeschaltet wird.

4. Mobiles Endgerät (10) nach Anspruch 3, wobei die Nut (150) eine Schiebenut (151) und eine Rückhaltenut (153), die mit der Schiebenut (151) in Verbindung ist, umfasst; wobei
der Schiebeblock (420) einen Begrenzungsabschnitt (421) und einen Verbindungsabschnitt (423) umfasst, wobei der Begrenzungsabschnitt (421) und der Verbindungsabschnitt (423) derart miteinander verbunden sind, dass sie eine einteilige Struktur sind;
der Verbindungsabschnitt (423) in die Rückhaltenut (153) aufgenommen ist und durch sie verläuft und mit dem Körperabschnitt (410) lösbar verbunden ist; und
der Begrenzungsabschnitt (421) in die Schiebenut (151) verschiebbar aufgenommen ist und von der Seite der Rückwand (111), die dem Anzeigebereich gegenüberliegt, freigelegt ist.

5. Mobiles Endgerät (10) nach Anspruch 4, wobei eine Größe eines Querschnitts der Rückhaltenut (153) größer als die des Verbindungsabschnitts (423) ist und die Größe des Querschnitts der Rückhaltenut (153) kleiner als die des Begrenzungsabschnitts (421) ist.

6. Mobiles Endgerät (10) nach Anspruch 4 oder Anspruch 5, das ferner ein zweites elastisches Element (160) umfasst, wobei ein Ende des zweiten elastischen Elements (160) am Körperabschnitt (410) anliegt und das weitere Ende des zweiten elastischen Elements (160) an der Endgerätvorrichtung (100) anliegt; und
das zweite elastische Element (160) konfiguriert ist, den Körperabschnitt (410) von der zweiten Stellung zur ersten Stellung zu drücken, um zu ermöglichen, dass der Körperabschnitt (410) mindestens teilweise in die Befestigungsnut (130) aufgenommen ist.

7. Mobiles Endgerät (10) nach einem der Ansprüche 3 bis 6, wobei
die erste Nutwand (141) im Vergleich zur zweiten Nutwand (143) näher bei der oberen Seitenwand (116) liegt und
der Körperabschnitt (410) von der zweiten Nutwand (143) vorsteht, wenn die Verriegelungszunge (400) in der ersten Stellung ist.

8. Mobiles Endgerät (10) nach Anspruch 7, wobei die zweite Nutwand (143) zu einer Seite geneigt ist, auf der die untere Seitenwand (118) angeordnet ist, um als eine Seitenschrägenwinkel zu dienen.

9. Mobiles Endgerät (10) nach einem der Ansprüche 2 bis 8, wobei die Abdeckung (210) eine frontale Stirnfläche (215), eine rückwärtige Stirnfläche (217), die der frontalen Stirnfläche (215) gegenüberliegt, und eine seitliche Stirnfläche, die zwischen der frontalen Stirnfläche (215) und der rückwärtigen Stirnfläche (217) verbunden ist, umfasst;
die seitliche Stirnfläche eine linke Stirnfläche (212), eine rechte Stirnfläche (214), die der linken Stirnfläche (212) gegenüberliegt, eine obere Stirnfläche (216) und eine untere Stirnfläche (218), die der oberen Stirnfläche (216) gegenüberliegt, umfasst;
die linke Stirnfläche (212) und die rechte Stirnfläche (214) zwischen der oberen Stirnfläche (216) und der unteren Stirnfläche (218) angeordnet sind;
die obere Stirnfläche (216) und die untere Stirnfläche (218) zwischen der linken Stirnfläche (212) und der rechten Stirnfläche (214) angeordnet sind;
die Lichteinfallsfläche (221) aus der frontalen Stirnfläche (215) freigelegt ist und
dann, wenn die Bildaufnahmevorrichtung (200) in die Befestigungsnut (130) aufgenommen ist, die frontale Stirnfläche (215) mit einer Außenoberfläche der Rückwand (111) bündig ist.

10. Mobiles Endgerät (10) nach einem der Ansprüche 1 bis 9, wobei die Bildaufnahmevorrichtung (200) einen Modulkontakt (2131) umfasst und die Endgerätvorrichtung (100) einen Vorrichtungskontakt (1451) umfasst und
dann, wenn die Bildaufnahmevorrichtung (200) in die Befestigungsnut (130) aufgenommen ist, der Modulkontakt (2131) mit dem Vorrichtungskontakt (1451) in Kontakt und verbunden ist, um zu ermöglichen, dass die Endgerätvorrichtung (100) die Bildaufnahmevorrichtung (200) lädt.

11. Mobiles Endgerät (10) nach einem der Ansprüche 1 bis 9, wobei die Bildaufnahmevorrichtung (200) eine Modulhauptplatine (240) umfasst, die in der Abdeckung (210) angeordnet ist;
das zweite Leistungsmodul (230) auf die Modulhauptplatine (240) gestapelt ist und konfiguriert ist, Energie für die Modulhauptplatine (240) zu liefern;
die Modulhauptplatine (240) mit dem Kameramodul (220) kommunikationstechnisch verbunden ist und
die Modulhauptplatine (240) ein erstes Durchgangsloch (241) definiert, das Kameramodul (220) ein Linsenrohr (223) umfasst, die Lichteinfallsfläche (221) bei einem Ende des Linsenrohrs (223) freigelegt ist und das Linsenrohr (223) durch das erste Durchgangsloch (241) verläuft.

12. Mobiles Endgerät (10) nach Anspruch 11, wobei das zweite Leistungsmodul (230) ein zweites Durchgangsloch (231) definiert, das zweite Durchgangsloch (231) mit dem ersten Durchgangsloch (241) kommuniziert und das Linsenrohr (223) durch das zweite Durchgangsloch (231) verläuft.

13. Mobiles Endgerät (10) nach einem der Ansprüche 1 bis 12, wobei
die Endgerätvorrichtung (100) ferner ein erstes drahtloses Kommunikationsmodul (180) umfasst und die Bildaufnahmevorrichtung (200) ferner ein zweites drahtloses Kommunikationsmodul (250) umfasst;
das erste Leistungsmodul (170) ferner konfiguriert ist, Energie für das erste drahtlose Kommunikationsmodul (180) zu liefern und das zweite Leistungsmodul (230) ferner konfiguriert ist, Energie für das zweite drahtlose Kommunikationsmodul (250) zu liefern; und
das erste drahtlose Kommunikationsmodul (180) mit dem zweiten drahtlosen Kommunikationsmodul (250) kommunikationstechnisch verbunden sein kann.

14. Mobiles Endgerät (10) nach Anspruch 13, wobei sowohl das erste drahtlose Kommunikationsmodul (180) als auch das zweite drahtlose Kommunikationsmodul (250) Bluetooth-Kommunikationsmodule oder Wi-Fi-Kommunikationsmodule oder ZigBee-Kommunikationsmodule oder NFC-Kommunikationsmodule sind.

## Revendications

1. Terminal mobile (10), comprenant :
un dispositif terminal (100), comprenant un écran d'affichage (120) et un premier module d'alimentation (170), le premier module d'alimentation (170) étant configuré pour alimenter l'écran d'affichage (120), une paroi arrière (111) du dispositif terminal (100) opposée à une région d'affichage de l'écran d'affichage (120) définissant une rainure de montage (130) ;
un dispositif de capture d'images (200), comprenant un couvercle (210), un module de caméra (220), et un second module d'alimentation (230), le second module d'alimentation (230) étant configuré pour alimenter le module de caméra (220), le module de caméra (220) et le second module d'alimentation (230) étant disposés à l'intérieur du couvercle (210), le module de caméra (220) ayant une face d'incidence de lumière (221) exposée depuis le couvercle (210), le dispositif de capture d'image (200) étant capable d'être reçu dans la rainure de montage (130) pour permettre à la face d'incidence de lumière (221) d'être exposée depuis le côté du dispositif terminal (100) opposé à la région d'affichage, le couvercle (210) définissant une fente (211) ;
un premier élément élastique (300), relié au dispositif terminal (100) et faisant saillie à partir d'une paroi de la rainure de montage (130) et s'étendant vers la rainure de montage (130) ; et
une languette de verrouillage (400), reliée de manière coulissante au dispositif terminal (100) et capable de coulisser pour atteindre une première position et une seconde position, après que le dispositif de capture d'images (200) a été reçu dans la rainure de montage (130),
la languette de verrouillage (400) étant au moins partiellement reçue dans la fente (211) et fixée avec une paroi de la fente (211), le dispositif de capture d'image (200) étant verrouillé dans la rainure de montage (130), et le premier élément élastique (300) venant en butée contre le dispositif de capture d'image (200), lorsque la languette de verrouillage (400) est dans la première position ;
la languette de verrouillage (400) étant libérée de la fente (211), et le premier élément élastique (300) étant configuré pour éjecter le dispositif de capture d'image (200) hors de la rainure de montage (130) pour permettre au dispositif de capture d'image (200) d'être détaché de la rainure de montage (130), lorsque la languette de verrouillage (400) est dans la seconde position ;
une plaque centrale (140), configurée comme une paroi inférieure de la rainure de montage (130) et agencée entre l'écran d'affichage (120) et la paroi arrière (111) ;
une première paroi de rainure (141) ; et
une seconde paroi de rainure (143) opposée à la première paroi de rainure (141) ;
la première paroi de rainure (141) et la seconde paroi de rainure (143) étant des parois de la rainure de montage (130) ; une extrémité de la première paroi de rainure (141) étant reliée à la plaque centrale (140), et une autre extrémité de la première paroi de rainure (141) étant reliée à la paroi arrière (111) ; une extrémité de la seconde paroi de rainure (143) étant reliée à la plaque centrale (140), et une autre extrémité de la seconde paroi de rainure (143) étant reliée à la paroi arrière (111) ;
le premier élément élastique (300) faisant saillie à partir de la plaque centrale (140) et fournissant une force élastique vers une ouverture de la rainure de montage (130) ; lorsque le dispositif de capture d'images (200) est reçu dans la rainure de montage (130), le premier élément élastique (300) venant en butée contre le dispositif de capture d'images (200) ;
la languette de verrouillage (400) étant agencée sur un côté avec la seconde paroi de rainure (143), et la première paroi de rainure (141) étant agencée avec une saillie (145), la saillie (145) dépassant de la première paroi de rainure (141) et s'étendant vers la rainure de montage (130) ;
le couvercle (210) définissant un évidement de positionnement (213) ; et
après que le dispositif de capture d'images (200) a été reçu dans la rainure de montage (130), la saillie (145) étant reçue dans l'évidement de positionnement (213) et fixée avec une paroi de l'évidement de positionnement (213).

2. Terminal mobile (10) selon la revendication 1, le dispositif terminal (100) comprenant en outre une paroi latérale reliée à une périphérie extérieure de l'écran d'affichage (120) ;
la paroi latérale comprenant une paroi latérale gauche (112), une paroi latérale droite (114) opposée à la paroi latérale gauche (112), une paroi latérale supérieure (116), et une paroi latérale inférieure (118) opposée à la paroi latérale supérieure (116) ;
la paroi latérale gauche (112) et la paroi latérale droite (114) étant disposées entre la paroi latérale supérieure (116) et la paroi latérale inférieure (118) ;
la paroi latérale supérieure (116) et la paroi latérale inférieure (118) étant disposées entre la paroi latérale gauche (112) et la paroi latérale droite (114) ;
la rainure de montage (130) s'étendant à travers la paroi arrière (111) ;
la rainure de montage (130) étant définie entre la paroi latérale gauche (112) et la paroi latérale droite (114), et étant définie entre la paroi latérale supérieure (116) et la paroi latérale inférieure (118).

3. Terminal mobile (10) selon la revendication 2, un côté de la paroi arrière (111) opposé à la région d'affichage définissant une rainure (150) s'étendant à travers une épaisseur de la paroi arrière (111) ;
la languette de verrouillage (400) comprenant une partie de corps (410) et un bloc coulissant (420) relié à la partie de corps (410) ;
le bloc coulissant (420) s'étendant à travers la rainure (150) ; et
la partie de corps (410) étant commutée entre la première position et la seconde position par une mise en prise coulissante entre le bloc coulissant (420) et la rainure (150).

4. Terminal mobile (10) selon la revendication 3, la rainure (150) comprenant une rainure de glissement (151) et une rainure de réservation (153) communiquant avec la rainure de glissement (151) ;
le bloc coulissant (420) comprenant une partie de limitation (421) et une partie de liaison (423), la partie de limitation (421) et la partie de liaison (423) étant reliées l'une à l'autre pour constituer une structure intégrée ;
la partie de liaison (423) étant reçue dans et s'étendant à travers la rainure de réservation (153) et étant reliée de manière détachable à la partie de corps (410) ;
la partie de limitation (421) étant reçue de manière coulissante dans la rainure de coulissement (151) et étant exposée depuis le côté de la paroi arrière (111) opposé à la région d'affichage.

5. Terminal mobile (10) selon la revendication 4, une taille d'une section transversale de la rainure de réservation (153) étant supérieure à celle de la partie de liaison (423), et la taille de la section transversale de la rainure de réservation (153) étant inférieure à celle de la partie de limitation (421).

6. Terminal mobile (10) selon la revendication 4 ou la revendication 5, comprenant en outre un second élément élastique (160), une extrémité du second élément élastique (160) venant en butée contre la partie de corps (410), l'autre extrémité du second élément élastique (160) venant en butée contre le dispositif terminal (100) ; et
le second élément élastique (160) étant configuré pour pousser la partie de corps (410) de la seconde position à la première position pour permettre à la partie de corps (410) d'être au moins partiellement reçue dans la rainure de montage (130).

7. Terminal mobile (10) selon l'une quelconque des revendications 3 à 6,
par rapport à la seconde paroi de rainure (143), la première paroi de rainure (141) étant plus proche de la paroi latérale supérieure (116) ;
la partie de corps (410) faisant saillie à partir de la seconde paroi de rainure (143) lorsque la languette de verrouillage (400) est à la première position.

8. Terminal mobile (10) selon la revendication 7, la seconde paroi de rainure (143) étant inclinée vers un côté au niveau duquel la paroi latérale inférieure (118) est disposée pour servir d'angle de dépouille.

9. Terminal mobile (10) selon l'une quelconque des revendications 2 à 8, le couvercle (210) comprenant une face d'extrémité avant (215), une face d'extrémité arrière (217) opposée à la face d'extrémité avant (215), et une face d'extrémité latérale reliée entre la face d'extrémité avant (215) et la face d'extrémité arrière (217) ;
la face d'extrémité latérale comprenant une face d'extrémité gauche (212), une face d'extrémité droite (214) opposée à la face d'extrémité gauche (212), une face d'extrémité supérieure (216), et une face d'extrémité inférieure (218) opposée à la face d'extrémité supérieure (216) ;
la face d'extrémité gauche (212) et la face d'extrémité droite (214) étant disposées entre la face d'extrémité supérieure (216) et la face d'extrémité inférieure (218) ;
la face d'extrémité supérieure (216) et la face d'extrémité inférieure (218) étant disposées entre la face d'extrémité gauche (212) et la face d'extrémité droite (214) ;
la face d'incidence de la lumière (221) étant exposée depuis la face d'extrémité avant (215) ;
lorsque le dispositif de capture d'images (200) est reçu dans la rainure de montage (130), la face d'extrémité avant (215) affleurant une surface extérieure de la paroi arrière (111).

10. Terminal mobile (10) selon l'une quelconque des revendications 1 à 9, le dispositif de capture d'images (200) comprenant un contact de module (2131), le dispositif terminal (100) comprenant un contact de dispositif (1451) ;
lorsque le dispositif de capture d'images (200) est reçu dans la rainure de montage (130), le contact de module (2131) étant en contact avec et relié au contact de dispositif (1451) pour permettre au dispositif terminal (100) de charger le dispositif de capture d'images (200).

11. Terminal mobile (10) selon l'une quelconque des revendications 1 à 9, le dispositif de capture d'images (200) comprenant une carte principale de module (240) disposée à l'intérieur du couvercle (210) ;
le second module d'alimentation (230) étant empilé sur la carte principale de module (240) et étant configuré pour alimenter la carte principale de module (240) ;
la carte principale de module (240) étant reliée de manière communicative au module de caméra (220) ;
la carte principale de module (240) définissant un premier trou traversant (241), le module de caméra (220) comprenant un tube de lentille (223), la face d'incidence de lumière (221) étant exposée à une extrémité du tube de lentille (223), et le tube de lentille (223) s'étendant à travers le premier trou traversant (241).

12. Terminal mobile (10) selon la revendication 11, le second module d'alimentation (230) définissant un second trou traversant (231), le second trou traversant (231) communiquant avec le premier trou traversant (241), et le tube de lentille (223) s'étendant à travers le second trou traversant (231).

13. Terminal mobile (10) selon l'une quelconque des revendications 1 à 12,
le dispositif terminal (100) comprenant en outre un premier module de communication sans fil (180), le dispositif de capture d'images (200) comprenant en outre un second module de communication sans fil (250) ;
le premier module d'alimentation (170) étant en outre configuré pour alimenter le premier module de communication sans fil (180), le second module d'alimentation (230) étant en outre configuré pour alimenter le second module de communication sans fil (250) ; et
le premier module de communication sans fil (180) étant capable d'être relié de manière communicative au second module de communication sans fil (250).

14. Terminal mobile (10) selon la revendication 13, le premier module de communication sans fil (180) et le second module de communication sans fil (250) étant tous deux des modules de communication Bluetooth, ou des modules de communication WiFi, ou des modules de communication ZigBee, ou des modules de communication NFC.
